# EUROPEAN PATENT SPECIFICATION

(11) **EP 4 174 144 B1**
(45) Date of publication and mention of the grant of the patent: **10.04.2024**
(21) Application number: 21306524.6
(22) Date of filing: 29.10.2021
(51) Int. Cl.: C09D 11/16, C09D 13/00

(54) **WATER-BASED SOLID MARKING COMPOSITION**
WASSERBASIERTE FESTE MARKIERUNGSZUSAMMENSETZUNG
COMPOSITION SOLIDE DE MARQUAGE À BASE D'EAU

(43) Date of publication of application: 03.05.2023
(73) Proprietor: Société BIC, 92110 Clichy (FR)
(72) Inventor: CONCEDIEU, Damien, 92110 CLICHY (FR)
(74) Representative: Cabinet Beau de Loménie

(56) References cited:
- EP-A1- 0 513 498
- EP-A2- 0 742 273
- JP-A- 2009 286 860
- US-A- 5 460 647
- US-A1- 2007 204 760

## Description

The present invention concerns solid water-based marking compositions which may be used for drawing or marking and that can be in form of a crayon, a pastel crayon, a stick or a colored pencil.

Conventional oil-based marking compositions such as wax-based coloring crayon (also known as wax crayon or wax pastel) do not have a good affinity with paper and therefore are hard to apply on it, while at the same time leaving sludge on paper and expressing poor color tone. Water-based solid marking composition containing alkali metal salt of carboxylic acid having 8 to 36 carbon atoms are already known such as in EP1342761 and US5725642. As a further document representing the state of the art US2007204760 may be cited.

However, the inventors have surprisingly found that the addition of fatty acid amide improves the smoothness of said water-based solid marking composition, as well as the quality deposit. Thus, the water-based solid marking composition according to the invention enable a smooth feeling when applying the composition on a paper surface while avoiding at the same time some common difficulties of liquid inks such as stability, for example sedimentation of particles that could be present in the ink, in particular if these have a D50 of about 10 µm or more, or such as ink leakage or clogging of the tip.

The inventors of the present invention have surprisingly found that the water-based solid marking composition according to the invention is endowed with high smoothness and enables to obtain a written mark of improved quality (such as regularity, and/or uniformity and/or a well-defined outline), in particular on a porous support. In addition according to some embodiments, the solid composition according to the invention is advantageously stable over time, in particular after being stored during one month at room temperature or at 40°C or even after 6 months at room temperature,

The present invention therefore concerns a water-based solid marking composition comprising
a) an alkali metal salt of carboxylic acid having 8 to 36 carbon atoms;
b) a fatty acid amide and
c) a coloring agent.

The water-based solid marking composition according to the invention exhibits a high smoothness, in particular it is soft and easy to apply (good lay-down), in particular on a porous surface such as paper, and with a satisfactory glide, in particular with no feel of friction by the user.

Besides, the water-based solid marking composition according to the invention enables to obtain a written mark of improved quality, in particular in terms of regularity, more specifically when applied on a porous surface such as paper. More specifically the obtained written mark exhibits good uniformity (in particular no or very few blank areas) and/or a well-defined outline.

In some embodiments, the water-based solid marking composition according to the invention is advantageously stable over time, in particular after being stored during one month at room temperature or at 40°C, or even after 6 months at room temperature, more specifically, no exudation and/or no crystallization phenomenon have been observed.

In some embodiments, the water-based solid marking composition according to the invention is advantageously of sufficient hardness, in particular it does not break during use, in particular when the composition is in form of a stick.

In some embodiments, the water-based solid marking composition according to the invention is advantageously translucent.

In some embodiments, the water-based solid marking composition according to the invention advantageously enables to carry out a coloured transparent written mark on a porous support such as paper, more specifically a first written mark made on a paper surface before applying the solid water-based composition according to the invention on the top of such first written mark can still be observed by naked eye through the deposit of solid water-based composition according to the invention.

In some embodiments, the water-based solid marking composition according to the invention advantageously enables to obtain a glossy written mark on a porous support such as paper.

Advantageously, the water-based solid marking composition according to the invention is compatible with porous substrate, such as paper and skin.

Hereinafter, a detailed description of the present invention will be given. The specific embodiments are meant to better illustrate the present invention, however, it should be understood that the present invention is not limited to these specific embodiments.

In the sense of the present invention, the expressions "comprising a" and "containing a" should be understood as being synonymous with respectively "comprising at least one" and "containing at least one".

In the sense of the present invention, the expressions "between ... and ..." or "ranging from ... to ..." should be understood as including the values of the limits.

In the sense of the present invention the term "solid" characterizes the state of the composition at room temperature (25°C) and at atmospheric pressure (760 mmHg). In particular the solid composition according to the invention can be in form of a stick, for example having a diameter of between 5 to 15 mm, more specifically between 8 to 14 mm.

Advantageously, the composition according to the invention has a hardness of between 30 and 300 g, or even from 50 to 200 g at room temperature (25°C) and at atmospheric pressure (760 mmHg), in particular for a sample in form of a stick of 12.1 mm in diameter.

### Protocol for measuring the hardness:

The measurement can be performed according to the following protocol: A sample of the composition under consideration is hot-cast into a stick mould of between 8 to 14 mm in diameter, more specifically of 12.1 mm.

The mould is then cooled in a freezer for about one hour. The stick is then stored at 20°C.

The hardness of the samples is measured after an interval of 24 hours. The hardness of the samples of compositions of the invention, expressed in grams, is measured using a DFGHS 2 tensile testing machine sold by the company Indelco-Chatillon.

The hardness corresponds to the maximum shear force exerted by a rigid tungsten wire 250 µm in diameter, advancing at a rate of 100 mm/minute. The technique described above is usually referred to as the "cheese wire" method.

The solid marking composition according to the invention is indeed intended to be used for drawing and/or marking.

In a specific embodiment the water-based marking composition according to the invention is in the form of a crayon, a pastel crayon, a stick or a colored pencil, advantageously a stick.

The water-based marking composition according to the invention can be molded, cast or extruded; specifically it is molded, for example in a stick form, specifically having a diameter between 5mm to 15 mm, more specifically between 8 to 14 mm.

For the purposes of the present invention, the term "porous substrate" is intended to mean substrate that contains pores. The porous substrates have empty spaces or pores that allow external matter, like marking composition, to penetrate into the substrate. In particular, writing surfaces such as white board or enamel board are not considered as writing porous substrate. In particular, the porous substrates are fibrous. For example, the "porous substrate" can be fabrics (such as flax, cotton) such as clothes, cellulosic fiber paper such as paper (printer paper, notebook paper or Clairefontaine paper (smooth paper) for example) and cardboard paper.

In the sense of the present invention the term "water-based composition" is intended to mean that is not water-free and thus comprises water, in particular as a solvent. More specifically the total content of water in the composition according to the invention is in the range of 1 to 50%, more specifically 2 to 30%, even more specifically 5 to 25%, still more specifically 7 to 15%, by weight based on the total weight of the composition.

The composition according to the present invention contains as component (a) an alkali metal salt of carboxylic acid having 8 to 36 carbon atoms, specifically an alkali metal salt of carboxylic acid having 12 to 36 carbon atoms, more specifically an alkali metal salt of carboxylic acid having 12 to 28 carbon atoms, specifically an alkali metal salt of fatty acid having 8 to 36 carbon atoms, more specifically an alkali metal salt of fatty acid having 12 to 36 carbon atoms, even more specifically an alkali metal salt of fatty acid having 12 to 28 carbon atoms, still more specifically an alkali metal salt of saturated linear fatty acid having 12 to 36 carbon atoms, more specifically 12 to 28 carbon atoms.

Specifically the alkali metal salt is selected in the group consisting of lithium salt, sodium salt, potassium salt, rubidium salt, caesium salt and francium salt, more specifically in the group consisting of lithium salt, sodium salt and potassium salt, even more specifically it is a sodium salt. In a specific embodiment, the alkali metal salt of carboxylic acid having 8 to 36 carbon atoms (a) is an alkali metal salt of monocarboxylic acid having 8 to 36 carbon atoms, specifically an alkali metal salt of saturated fatty acid having 8 to 36 carbon atoms, more specifically an alkali metal salt of saturated fatty acid having 12 to 28 carbon atoms. Specific examples of saturated fatty acids according to the invention are caprylic acid, capric acid, lauric acid, myristic acid, palmitic acid, stearic acid, arachidic acid, behenic acid, lignoceric acid and cerotic acid, specifically the examples are lauric acid, myristic acid, palmitic acid, stearic acid, arachidic acid, behenic acid, lignoceric acid and cerotic acid, more specifically the saturated fatty acid is stearic acid.

Even more specifically, the component (a) has the following formula: R₄COOX in which R₄ represents a saturated alkyl group in C₇-C₃₅, more specifically in C₁₁-C₂₇, and X represents an alkali, in particular an alkali metal.

For the purposes of the present invention, the term "Cₓ-C_{y} alkyl group" is intended to mean any linear or branched alkyl group having from x to y carbon atoms.

In a specific embodiment, component (a) is sodium stearate.

Specifically, the total content of the alkali metal salt of carboxylic acid having 8 to 36 carbon atoms (a) in the composition according to the invention is in the range of 0.1 to 20%, more specifically 1 to 15%, still more specifically 2 to 15%, even still more specifically 4 to 10%, by weight based on the total weight of the composition.

In particular Component (a) has the function of a structuring agent in the composition according to the present invention.

The composition according to the present invention contains as component (b) a fatty acid amide. Specifically the fatty acid is saturated or unsaturated, more specifically saturated, even more specifically selected in the group consisting of caprylic acid, capric acid, lauric acid, myristic acid, palmitic acid, stearic acid, arachidic acid, behenic acid, lignoceric acid and cerotic acid, still more specifically in the group consisting of caprylic acid, capric acid, lauric acid, myristic acid, palmitic acid and stearic acid, even still more specifically in the group consisting of capric acid and stearic acid, advantageously it is capric acid.

In a specific embodiment, component (b) has the following formula (I) R₁CONR₂R₃, in which:
R₁ represents an alkyl or alkenyl group having from 5 to 18 carbon atoms, specifically an alkyl group, said alkyl or alkenyl group being optionally substituted by one or several groups selected among a chloro atom, a fluoro atom, a bromo atom, a nitro group, a nitrile group, an hydroxyl group, a thiol group, a carboxyl group, an ester group having 2 to 6 carbon atoms, a C₁₋₂₂-alkoxy group, C₆₋₁₄ aryl group, a C₇-C₂₀ alkaryl group, an amino group, an amino-C₁₋₂₂-alkyl group and an amino-di(C₁₋₂₂-alkyl) group, more specifically R₁ represents an unsubstituted alkyl or alkenyl group having from 5 to 18 carbon atoms , and
R₂ and R₃ independently from each other represent a hydrogen atom or a C₁-C₆ alkyl group, such as a methyl group, optionally substituted by a hydroxyl group and/or a C₁-C₂₂ alkoxy group, more specifically R₂ and R₃ independently from each other represent a hydrogen atom or an unsubstituted C₁-C₆ alkyl group, more specifically R₂ and R₃ independently from each other represent a C₁-C₆ alkyl group, still more specifically non-substituted, even still more specifically R₂ and R₃ represent both a methyl group. In a specific embodiment, R₂ or R₃ does not represent a hydrogen atom.

For the purpose of the present invention, the term "C₁₋₂₂-alkoxy group" is intended to mean any linear or branched alkoxy group having 1 to 22, carbon atoms, specifically the group OCH₃.

For the purpose of the present invention, the term "C₆₋₁₄ aryl group" is intended to mean one or more aromatic rings having 6 to 14 carbon atoms, which may be joined or fused. In particular, the aryl groups may be phenyl or naphthyl groups.

For the purpose of the present invention, the term "C₇-C₂₀ alkaryl group" is intended to mean any aryl group as defined above, linked via an alkyl group as defined above. In particular, an alkaryl group is a benzyl group. The term "alkenyl" as used in the present invention refers to straight or branched chain alkenyl radicals including, but not limited to pentenyl, hexenyl and the like.

The term "ester group having 2 to 6 carbon atoms" as used in the present invention refers to straight or branched chain esters radicals having from 2 to 6 carbon atoms.

In a specific embodiment, component (b) is a dimethylamide, more specifically such as dimethylcapramide and dimethylstearamide, even more specifically it is dimethylcapramide.

In a specific embodiment, component (b) is selected in the group consisting of dimethylcapramide, capramide, stearamide and dimethylstearamide, more specifically in the group consisting of dimethylcapramide and dimethylstearamide, even more specifically it is dimethylcapramide.

More specifically, the total content of the fatty acid amide (b) in the composition according to the invention is in the range of 0.1 to 20%, more specifically 0.1 to 10%, still more specifically 0.2 to 5%, even still more specifically 1 to 5%, by weight based on the total weight of the composition.

The composition according to the present invention contains as component (c) a coloring agent. The coloring agent may be a pigment and/or a dye, more specifically it is a dye.

The term "dyes" should be understood as meaning colored, mineral or organic particles of any form, which are soluble in the medium in which they are solubilized (here water), and which are intended to color the solid marking composition. The at least one dye may be selected in the group consisting of direct dyes (for example C.I direct black 17, 19, 22, 32, 38, 51, 71; C.I direct yellow 4, 26, 44, 50; C.I direct red 1, 4, 23, 31, 37, 39, 75, 80, 81, 83, 225, 226, 227; C.I direct blue 1, 15, 41, 71, 86, 87, 106, 108, 199, and the like), acid dyes (for example C.I acid black 1, 2, 24, 26, 31, 52, 107, 109, 110, 119, 154; C.I acid yellow 1, 7, 17, 19, 23, 25, 29, 38, 42, 49, 61, 72, 78, 110, 127, 135, 141, 142; C.I acid red 8, 9, 14, 18, 26, 27, 33, 35, 37, 51, 52, 57, 82, 83, 87, 92, 94, 111, 129, 131, 138, 186, 249, 254, 265, 276; C.I acid violet 15, 17, 49; C.I acid blue 1, 3, 7, 9, 15, 22, 23, 25, 40, 41, 43, 62, 78, 83, 90, 93, 100, 103, 104, 112, 113, 158; C.I acid green 3, 9, 16, 25, 27; C.I acid orange 56, and the like), food dyes (such as C.I. food yellow 3, and the like), Malachite green (C.I 4200) Victoria blue FB (C.I. 44045) methyl violet FN (C.I. 42535), rhodamine F4G (C.I. 45160), and rhodamine 6GCP (C.I 45160), and mixtures thereof. Advantageously, the at least one dye comprises an acid dye, more advantageously it consists in an acid dye.

The term "pigment" should be understood as meaning white or colored, mineral or organic particles of any form, which are insoluble in the medium in which they are solubilized, and which are intended to color the solid marking composition. The pigment can be a fluorescent pigment, a mineral pigment a phosphorescent pigment. The pigments are also generally contained in a dispersion, where the grinding down or particle size reduction is accompanied by appropriate dispersants to achieve stable dispersions. The pigment can have a particle size above 10 microns. The pigment is specifically in the form of a pigment dispersion, more specifically selected in the group consisting of pigment black 7 (such as Flexiverse III black 7 by SunChemical^{®}), pigment blue 15:3 (such as APE FREE BL 15:3 DISP by SunChemical^{®}), pigment red 210 (such as Sunsperse^{®}Red 210by SunChemical^{®}), pigment green 7 (such as Sunsperse Eco green, Flexiverse FD Green, Flexiverse Green 7, Flexiverse HC GRN 7 by SunChemical^{®}), and mixtures thereof.

Specifically, the total content of the coloring agent (c) in the composition according to the invention is in the range of 0.1 to 20%, more specifically 0.2 to 15%, still more specifically 0.5 to 10%, even still more specifically 0.7 to 5%, by weight based on the total weight of the composition.

Component (c) has the function of providing color to the mark left on the porous surface when using the composition according to the present invention.

The water-based solid marking composition according to the present invention may further contains a co-solvent, specifically selected in the group of glycol ethers such as triethylene glycol, polyethylene glycol, diethylene glycol monoethyl ether, diethylene-glycol-mono butyl ether, dipropyleneglycol monobutyl ether, tripropylene glycol monomethyl ether, phenoxyethanol, phenoxypropanol; alcohols, such as phenoxyethanol, phenoxypropanol; linear or branched alcohols in C₁-C₁₅ such as isopropanol, butanol, isobutanol, pentanol, benzyl alcohol, glycerol, diglycerol or polyglycerol; esters such as ethyl acetate or propyl acetate; carbonate esters such as propylene carbonate or ethylene carbonate; ketones such as methylisobutylketone (MIBK), acetone or cyclohexanone, and mixtures thereof. In a preferred embodiment, the co-solvent is a mixture of glycol ethers and linear or branched alcohols in C₁-C₁₅, and more specifically the co-solvent is a mixture of glycerol and glycol ether(s), more specifically a mixture of glycerol and triethylene glycol and/or propylene glycol, even more specifically a mixture of glycerol and triethylene glycol (TEG).

Specifically, the total content of co-solvent(s) in the composition according to the invention is in the range of 10 to 90%, specifically 20 to 90%, more specifically 30 to 85%, even more specifically 50 to 80%, by weight based on the total weight of the composition.

The water-based solid marking composition according to the present invention may further contains at least one additive known by the skilled person to be usable in water-based composition, in particular in water-based solid marking compositions, specifically selected in the group consisting of an antimicrobial agent, a film-forming agent, a wax, a slip agent, a corrosion inhibitor, an antifoam agent and/or a pH adjusting agent, and mixtures thereof, more specifically the composition according to the invention comprises a pH adjusting agent such as triethanolamine. Specifically, the total content of the at least one additive in the composition according to the invention is in the range of 0.01 to 25%, specifically 0.05 to 20%, by weight based on the total weight of the composition.

The solid-marking composition according to the invention can be enclosed in a casing, for example made of wood or plastic material. However, the presence of a casing is not mandatory and the composition can be used as such, without any casing and can be therefore self-supported.

The present invention also concerns a process of preparation of the water-based solid marking composition according to the invention, said process comprising the following successive steps:
A) addition of water and optional co-solvent(s) a at a temperature in the range of 80 to 90°C specifically with a shear rate in the range of 20 to 25m/s,
B) addition of component a) at a temperature in the range of 80 to 90°C, specifically with a shear rate in the range of 20 to 25m/s,
C) addition of component b) at a temperature in the range of 80 to 90°C, specifically with a shear rate in the range of 20 to 25m/s,
D) addition of component c) at a temperature in the range of 80 to 90°C, specifically with a shear rate in the range of 20 to 25m/s,
E) giving the water-based solid composition its final shape, such as a stick, more specifically by molding, casting or extruding, and letting the composition cool down to room temperature (23°C).

In addition, the present invention concerns the use of a combination of an alkali metal salt of carboxylic acid having 8 to 36 carbon atoms (a) and a fatty acid amide (b) for improving the writing smoothness and/or the quality of deposit and/or the solidity and/or the stability, more specifically over time, of a water-based solid marking composition.

Components (a) and (b) may be as described above.

In addition to the foregoing, the invention also comprises other provisions which will emerge from the additional description which follows, which relates to the preparation of writing ink compositions according to the present invention and comparative examples.

### Example 1: Preparation of water-based solid marking stick according to the present invention and a comparative composition

A marking stick composition according to the invention (Ex 1) and a comparative marking stick composition (without the fatty acid amide: comparative Ex 1) have been prepared. Their ingredients and weight% are indicated in table 1.

**Table 1:**

| Chemical name | Ex 1 (according to the invention) | Comparative Ex 1 (not belonging to the invention) |
|---|---|---|
| | Amount in wt.% | Amount in wt.% |
| glycerol | 29.3 | 29.3 |
| Triethylene glycol (TEG) | 35.1 | 37.5 |
| Sodium stearate | 7.1 | 6.9 |
| Dimethyl capramide | 2.00 | - |
| Acid yellow 23 | 1.1 | 1.1 |
| Triethanolamine (TEA) | 14.9 | 14.9 |
| Demineralized water | Rest (up to 100.0%) | Rest (up to 100.0%) |

### Preparation

The solid marking compositions were prepared by the following process.:
A) Addition of water, glycerol, and triethylene glycol at a temperature of 85°C and mixture agitated at a shear rate of 25m/s,
B) Addition of sodium stearate at a temperature of 85°C and mixture agitated at a shear rate of 25m/s,
C) Addition of dimethyl capramide at a temperature of 85°C and mixture agitated at a shear rate of 25m/s,
D) Addition of Acid Yellow 23 and triethanolamine at a temperature of 85°C and mixture agitated at a shear rate of 25m/s,
E) Mold the compositions into a final stick shape of diameter:12.1 mm, length: 50 mm, and letting the composition cool down to room temperature (23°C).

### Evaluation of smoothness and regularity performances of the solid compositions

### - Smoothness performance: Measurement of smoothness

The smoothness is the ability for the user to have a comfortable feel when applying a writing mark with the composition, and in particular the written mark is easy to make on paper surface. In particular the easiness to perform a deposit when applying the composition (i.e. without using a strong pressure (softness)), as well as the glide on the paper surface (i.e. no feel of friction for the user or scratchy noise) have been evaluated. The assessment has been done on paper 1: Papier Veloute 9000, 90g/m2, 21x 29.7 cm, by Clairefontaine, paper 2: printed paper, 80g/m2, paper 3: Notebook, 90g/m2, 21x 29.7 cm, by Clairefontaine, according to the following method at 23°C and 50% relative humidity.

The method is as follows:
Straight lines with a length of 18 cm were drawn by a trained user (i.e. an expert used to evaluate marking compositions) with the solid marking composition on the paper surface (repeated 5 times in order to obtain an average value).

The scoring (i.e. the smoothness efficiency) is defined as follows:
10: Smoothness of the written mark is very efficient : no feeling of hardness for the user, i.e. the composition is soft and can be applied on the paper surface easily without using a strong pressure) and the glide feeling on the paper surface is satisfactory.
5: Smoothness of the written mark is not completely efficient : feeling of hardness for the user, i.e. a higher pressure is needed to apply the composition correctly on the paper surface or the glide is on the surface is moderate).
0: Smoothness of the written mark is not efficient : feeling of scratching for the user, i.e. the composition is hard, meaning that it is difficult to make apply it on the paper surface and a strong pressure is needed and the glide feeling on the paper surface is unsatisfactory, i.e. with a feel of friction).

The results are indicated in Table 2 below.

### - Regularity of the written mark

The regularity (or quality) of the written mark is the uniformity as well as the quality of the outline of a written mark made by a trained user (i.e. an expert used to evaluate marking compositions) by applying on a paper surface.

In particular, the uniformity of the written mark, such as the presence of blank areas, as well as the quality of the outline of the written mark (such as a good definition of the outline) have been evaluated visually by the naked eye.

The assessment has been done on paper 1: Papier Veloute 9000, 90g/m2, 21x 29.7 cm, by Clairefontaine, paper 2: printed paper, 80g/m2, paper 3: Notebook, 90g/m2, 21x 29.7 cm, by Clairefontaine, according to the following method at 23°C and 50% relative humidity.

The method is as follows:
Straight lines with a length of 18 cm were drawn by a trained user with the solid marking composition on the paper surface (repeated 5 times in order to obtain an average value).

The scoring (color regularity of the written mark) is defined as follows:
10: The color of the written mark after application on the paper surface is uniform (i.e. without blank areas or very few blank areas) and has a well-defined outline.
5: The color of the written mark after application on the paper surface is not completely uniform; i.e. several white areas and/or blurs evaluated at different points of the written mark can be observed visually within the written mark, and the outline of the written mark is moderately well defined.
0: The color of the written mark after applying on the paper surface is not uniform (many white areas and/or blurs evaluated at different points of the written mark can be observed visually within the written mark) and the outline of the written mark is not well-defined.

The results are indicated in Table 2 below.

**Table 2: Results of the smoothness and regularity tests of the solid marking compositions**

| | **Clairefontaine paper "smooth paper" 90g/m2** | | **Printer paper 80g/m2** | | **Notebook paper 90g/m2** | |
|---|---|---|---|---|---|---|
| Example | Color regularity | Smooth ness | Color regularity | Smoothness | Color regularity | Smooth ness |
| Comp Ex 1 | 0 | 5 | 0 | 5 | 0 | 5 |
| Ex 1 | 10 | 10 | 5 | 10 | 10 | 10 |

The written mark made with the marking stick Ex 1 according to the invention comprising a fatty acid amid exhibit better results in terms regularity (quality) of the deposit than comparative Ex 1. Thus, the addition of the fatty acid amid has enable to improve the quality of the deposit on paper.

The marking stick Ex 1 according to the invention also exhibit a better smoothness than comparative Ex 1, in particular composition of Ex 1 is smooth, easy to apply, and with a good glide feeling.

Also, the written mark of made with the composition of Ex 1 is glossy and the marking stick of Ex 1 was stable over time, in particular during after at least six months storage at room temperature (no crystallization and no exudation phenomenon has been observed).

### Evaluation of transparency of the solid compositions and of the transparency of the written mark made with solid compositions of example 1 and comparative example 1

### - Transparency of the solid sticks

The transparency of the solid sticks of example 1 and comparative example 1 has been evaluated by visual observation by the naked eye.

The scoring (i.e. transparency of the stick) is defined as follows:
[O]: solid stick is transparent
[/]: solid stick is translucent
[X]: solid stick is opaque

### - Transparency of the written mark

The transparency of the written mark made on a paper surface with the solid sticks of example 1 and comparative example 1 has been evaluated by:
1. carrying out manual writing with a black ball pen ink (Bic Cristal, medium point 1mm) on paper 1 (Papier Veloute 9000, 90g/m2, 21x 29.7 cm, by Clairefontaine),
2. then applying the stick composition to be evaluated on the top of this written line made with a ball pen and
3. observing by naked eye if the shape of the writing with the ball pen is visible and identifiable.

The scoring (i.e. transparency of the written mark) is defined as follows:
[O]: the shape of the ball pen written line can be confirmed.
[X]: the shape of the ball pen written line cannot be confirmed.

The results are indicated in Table 3 below:

**Table 3:**

| | **Clairefontaine paper "smooth paper" 90g/m2** | |
|---|---|---|
| Example | Transparency of the Stick | Transparency of the written mark |
| Comp Ex 1 | / | O |
| Ex 1 | / | O |

Thus, both of the marking sticks of Ex 1 according to the invention and of comparative Ex 1 are translucent. Besides, both of the written marks made on a paper surface with these two sticks are transparent as the manual writing is still visible after application of the solid marking stick composition.

## Claims

1. A water-based solid marking composition comprising
a) an alkali metal salt of carboxylic acid having 8 to 36 carbon atoms;
b) a fatty acid amide and
c) a coloring agent.

2. The water-based solid marking composition according to claim 1, wherein the alkali metal salt of carboxylic acid having 8 to 36 carbon atoms (a) is an alkali metal salt of saturated fatty acid having 8 to 36 carbon atoms, more specifically an alkali metal salt of saturated fatty acid having 12 to 28 carbon atoms, more specifically an alkali metal salt of saturated linear fatty acid having 12 to 28 carbon atoms, even more specifically it is sodium stearate.

3. The water-based solid marking composition according to any of claims 1 or 2, wherein the total content of alkali metal salt of carboxylic acid having 8 to 36 carbon atoms (a) is in the range of 0.1 to 20%, more specifically of 1 to 15%, more specifically of 2 to 15%, by weight based on the total weight of the composition.

4. The water-based solid marking composition according to any one of claims 1 to 3, wherein the fatty acid amide (b) has the following formula (I)
R₁CONR₂R₃ (I),
in which R₁ represents an alkyl or alkenyl group having from 5 to 18 carbon atoms, said alkyl or alkenyl group being optionally substituted by one or several groups selected among a chloro atom, a fluoro atom, a bromo atom, a nitro group, a nitrile group, an hydroxyl group, a thiol group, a carboxyl group, an ester group having 2 to 6 carbon atom, a C₁₋₂₂-alkoxy group, C₆₋₁₄ aryl group, a C₇-C₂₀ alkaryl group, an amino group, an amino-C₁₋₂₂-alkyl group and an amino-di(C₁₋₂₂-alkyl) group, and
R₂ and R₃ independently from each other represent a hydrogen atom or a C₁-C₆ alkyl group, optionally substituted by a hydroxyl group and/or a C₁-C₂₂ alkoxy group.

5. The water-based solid marking composition according to claim 4, wherein at least one of R₂ or R₃ does not represent a hydrogen atom, more specifically wherein R₂ and R₃ independently from each other represent a a C₁-C₆ alkyl group, even more specifically wherein the fatty acid amide (b) is dimethylcapramide.

6. The water-based solid marking composition according to any one of claims 1 to 5, wherein the total content of fatty acid amide (b) is in the range of 0.1 to 20%, more specifically 0.1 to 10%, even more specifically 0.2 to 5%, by weight based on the total weight of the composition.

7. The water-based solid marking composition according to any one of claims 1 to 6, wherein the coloring agent (c) is a pigment or a dye and/or wherein the total content in coloring agent (c) is in the range of 0.1 to 20%, more specifically 0.2 to 15%, even more specifically 0.5 to 10%, by weight based on the total weight of the composition.

8. The water-based solid marking composition according to any one of claims 1 to 7, wherein the total content of water is in the range of 1 to 50%, more specifically 2 to 30%, even more specifically 5 to 25%, by weight based on the total weight of the composition.

9. The water-based solid marking composition according to any one of claims 1 to 8, further comprising at least a co-solvent, more specifically wherein the co-solvent is selected from:
- glycol ethers such as triethylene glycol, polyethylene glycol, diethylene glycol monoethyl ether, diethylene-glycol-mono butyl ether, dipropyleneglycol monobutyl ether, tripropylene glycol monomethyl ether,
- alcohols, such as phenoxyethanol, phenoxypropanol; linear or branched alcohols in C₁-C₁₅ such as isopropanol, butanol, isobutanol, pentanol, benzyl alcohol, glycerol, diglycerol or polyglycerol;
- esters such as ethyl acetate or propyl acetate;
- carbonate esters such as propylene carbonate or ethylene carbonate;
- ketones such as methylisobutylketone, acetone or cyclohexanone, and
- mixtures thereof,
more specifically wherein the co-solvent is a mixture of glycerol and glycol ether(s), more specifically a mixture of glycerol and triethylene glycol and/or propylene glycol.

10. The water-based solid marking composition according to claim 9, wherein the total content of co-solvent is in the range of 10 to 90%, more specifically 20 to 90%, even more specifically 30 to 85%, by weight based on the total weight of the composition.

11. The water-based solid marking composition according to any one of claims 1 to 10, further comprising at least one additive, more specifically wherein the additive is selected from an antimicrobial agent, a film-forming agent, a wax, a slip agent, a corrosion inhibitor, an antifoam agent and/or a pH adjusting agent and mixtures thereof.

12. The water-based solid marking composition according to claim 11, wherein the total content of additive is in the range of 0.01 to 25%, more specifically 0.05 to 20%, by weight based on the total weight of the composition.

13. The water-based solid marking composition according to any one of claims 1 to 12, which is in the form of a crayon, a pastel crayon, a stick, a colored pencil.

14. A process of preparation of the water-based solid marking composition according to any one of claims 1 to 13, said process comprising the following successive steps:
A) addition of water and optional co-solvent(s) at a temperature in the range of 80 to 90°C, more specifically with a shear rate in the range of 20 to 25m/s,
B) addition of component a) at a temperature in the range of 80 to 90°C, specifically with a shear rate in the range of 20 to 25m/s,
C) addition of component b) at a temperature in the range of 80 to 90°C, specifically with a shear rate in the range of 20 to 25m/s,
D) addition of component c) at a temperature in the range of 80 to 90°C, specifically with a shear rate in the range of 20 to 25m/s,
E) giving the water-based solid composition its final shape, more specifically by molding, casting or extruding, and letting the composition cool down to room temperature.

15. Use of a combination of an alkali metal salt of carboxylic acid having 8 to 36 carbon atoms (a) and a fatty acid amide (b) for improving the writing smoothness and/or the quality of deposit and/or the solidity and/or the stability over time of a water-based solid marking composition.

## Patentansprüche

1. Wasserbasierte feste Markierungszusammensetzung, umfassend
a) ein Alkalimetallsalz einer Carbonsäure, die 8 bis 36 Kohlenstoffatome aufweist,
b) ein Fettsäureamid und
c) ein Färbemittel.

2. Wasserbasierte feste Markierungszusammensetzung nach Anspruch 1, wobei das Alkalimetallsalz der Carbonsäure, die 8 bis 36 Kohlenstoffatome aufweist, (a) ein Alkalimetallsalz einer gesättigten Fettsäure, die 8 bis 36 Kohlenstoffatome aufweist, spezieller ein Alkalimetallsalz der gesättigten Fettsäure, die 12 bis 28 Kohlenstoffatome aufweist, spezieller ein Alkalimetallsalz einer gesättigten linearen Fettsäure, die 12 bis 28 Kohlenstoffatome aufweist, ist, noch spezieller ist es Natriumstearat.

3. Wasserbasierte feste Markierungszusammensetzung nach einem der Ansprüche 1 oder 2, wobei der Gesamtgehalt an Alkalimetallsalz der Carbonsäure, die 8 bis 36 Kohlenstoffatome aufweist, (a) im Bereich von 0,1 bis 20 Gew.-%, spezieller von 1 bis 15 Gew.-%, spezieller von 2 bis 15 Gew.-%, bezogen auf das Gesamtgewicht der Zusammensetzung, ist.

4. Wasserbasierte feste Markierungszusammensetzung nach einem der Ansprüche 1 bis 3, wobei das Fettsäureamid (b) die folgende Formel (I) aufweist
R₁CONR₂R₃ (I),
wobei R₁ eine Alkyl- oder Alkenylgruppe darstellt, die 5 bis 18 Kohlenstoffatome aufweist, wobei die Alkyl- oder Alkenylgruppe optional durch eine oder mehrere Gruppen substituiert wird, die aus einem Chloratom, einem Fluoratom, einem Bromatom, einer Nitrogruppe, einer Nitrilgruppe, einer Hydroxylgruppe, einer Thiolgruppe, einer Carboxylgruppe, einer Estergruppe, die 2 bis 6 Kohlenstoffatome aufweist, einer C₁₋₂₂-Alkoxygruppe, einer C₆₋₁₄-Arylgruppe, einer C₇-C₂₀-Alkarylgruppe, einer Aminogruppe, einer Amino-C₁₋₂₂-Alkylgruppe und einer Amino-di(C₁₋₂₂-alkyl)gruppe ausgewählt werden, und
R₂ und R₃ unabhängig voneinander ein Wasserstoffatom oder eine C₁-C₆-Alkylgruppe darstellen, optional substituiert durch eine Hydroxylgruppe und/oder eine C₁-C₂₂-Alkoxygruppe.

5. Wasserbasierte feste Markierungszusammensetzung nach Anspruch 4, wobei mindestens eines von R₂ oder R₃ kein Wasserstoffatom darstellt, spezieller wobei R₂ und R₃ unabhängig voneinander eine C₁-C₆-Alkylgruppe darstellen, noch spezieller wobei das Fettsäureamid (b) Dimethylcapramid ist.

6. Wasserbasierte feste Markierungszusammensetzung nach einem der Ansprüche 1 bis 5, wobei der Gesamtgehalt an Fettsäureamid (b) im Bereich von 0,1 bis 20 Gew.-%, spezieller 0,1 bis 10 Gew.-%, noch spezieller 0,2 bis 5 Gew.-%, bezogen auf das Gesamtgewicht der Zusammensetzung, ist.

7. Wasserbasierte feste Markierungszusammensetzung nach einem der Ansprüche 1 bis 6, wobei das Färbemittel (c) ein Pigment oder ein Farbstoff ist und/oder wobei der Gesamtgehalt an Färbemittel (c) im Bereich von 0,1 bis 20 Gew.-%, spezieller 0,2 bis 15 Gew.-%, noch spezieller 0,5 bis 10 Gew.-%, bezogen auf das Gesamtgewicht der Zusammensetzung, ist.

8. Wasserbasierte feste Markierungszusammensetzung nach einem der Ansprüche 1 bis 7, wobei der Gesamtgehalt an Wasser im Bereich von 1 bis 50 Gew.-%, spezieller 2 bis 30 Gew.-%, noch spezieller 5 bis 25 Gew.-%, bezogen auf das Gesamtgewicht der Zusammensetzung, ist.

9. Wasserbasierte feste Markierungszusammensetzung nach einem der Ansprüche 1 bis 8, ferner umfassend mindestens ein Co-Lösungsmittel, spezieller wobei das Co-Lösungsmittel ausgewählt ist aus:
- Glycolethern, wie etwa Triethylenglycol, Polyethylenglycol, Diethylenglycolmonoethylether, Diethylenglycolmonobutylether, Dipropylenglycolmonobutylether, Tripropylenglycolmonomethylether, -Alkoholen, wie etwa Phenoxyethanol, Phenoxypropanol; linearen oder verzweigten Alkoholen in C₁-C₁₅, wie etwa Isopropanol, Butanol, Isobutanol, Pentanol, Benzylalkohol, Glycerin, Diglycerin oder Polyglycerin;
- Estern, wie etwa Ethylacetat oder Propylacetat;
- Carbonatestern, wie etwa Propylencarbonat oder Ethylencarbonat;
- Ketonen, wie Methylisobutylketon, Aceton oder Cyclohexanon, und
- Mischungen davon,
spezieller wobei das Co-Lösungsmittel eine Mischung aus Glycerin und Glycolether(n), spezieller eine Mischung aus Glycerin und Triethylenglycol und/oder Propylenglycol, ist.

10. Wasserbasierte feste Markierungszusammensetzung nach Anspruch 9, wobei der Gesamtgehalt an Co-Lösungsmittel im Bereich von 10 bis 90 Gew.-%, spezieller 20 bis 90 Gew.-%, noch spezieller 30 bis 85 Gew.-%, bezogen auf das Gesamtgewicht der Zusammensetzung, ist.

11. Wasserbasierte feste Markierungszusammensetzung nach einem der Ansprüche 1 bis 10, ferner umfassend mindestens ein Additiv, spezieller wobei das Additiv aus einem antimikrobiellen Mittel, einem Filmbildner, einem Wachs, einem Gleitmittel, einem Korrosionsinhibitor, einem Schaumverhütungsmittel und/oder einem pH-Einstellmittel und Mischungen davon ausgewählt ist.

12. Wasserbasierte feste Markierungszusammensetzung nach Anspruch 11, wobei der Gesamtgehalt an Additiv im Bereich von 0,01 bis 25 Gew.-%, spezieller 0,05 bis 20 Gew.-%, bezogen auf das Gesamtgewicht der Zusammensetzung, ist.

13. Wasserbasierte feste Markierungszusammensetzung nach einem der Ansprüche 1 bis 12, die in der Form einer Wachskreide, einer Pastelkreide, eines Sticks, eines Buntstifts vorliegt.

14. Verfahren zum Herstellen der wasserbasierten festen Markierungszusammensetzung nach einem der Ansprüche 1 bis 13, das Verfahren umfassend die folgenden aufeinanderfolgenden Schritte:
A) Zugabe von Wasser und optionaler Co-Lösungsmittel bei einer Temperatur im Bereich von 80 bis 90 °C, spezieller mit einer Schergeschwindigkeit im Bereich von 20 bis 25 m/s,
B) Zugabe von Komponente a) bei einer Temperatur im Bereich von 80 bis 90 °C, speziell mit einer Schergeschwindigkeit im Bereich von 20 bis 25 m/s,
C) Zugabe von Komponente b) bei einer Temperatur im Bereich von 80 bis 90 °C, speziell mit einer Schergeschwindigkeit im Bereich von 20 bis 25 m/s,
D) Zugabe von Komponente c) bei einer Temperatur im Bereich von 80 bis 90 °C, speziell mit einer Schergeschwindigkeit im Bereich von 20 bis 25 m/s,
E) Verleihung der wasserbasierten festen Zusammensetzung ihrer endgültigen Form, spezieller durch Formen, Gießen oder Extrudieren und Abkühlenlassen der Zusammensetzung auf Raumtemperatur.

15. Verwendung einer Kombination aus einem Alkalimetallsalz der Carbonsäure, die 8 bis 36 Kohlenstoffatome aufweist, (a) und einem Fettsäureamid (b) zum Verbessern der Schreibglätte und/oder der Qualität einer Abscheidung und/oder der Festigkeit und/oder der Stabilität im Laufe der Zeit einer wasserbasierten festen Markierungszusammensetzung.

## Revendications

1. Composition de marquage solide à base d'eau comprenant
a) un sel de métal alcalin d'acide carboxylique ayant 8 à 36 atomes de carbone ;
b) un amide d'acide gras et
c) un agent colorant.

2. Composition de marquage solide à base d'eau selon la revendication 1, dans laquelle le sel de métal alcalin d'acide carboxylique ayant 8 à 36 atomes de carbone (a) est un sel de métal alcalin d'acide gras saturé ayant 8 à 36 atomes de carbone, plus spécifiquement un sel de métal alcalin d'acide gras saturé ayant 12 à 28 atomes de carbone, plus spécifiquement un sel de métal alcalin d'acide gras linéaire saturé ayant 12 à 28 atomes de carbone, encore plus spécifiquement, il s'agit de stéarate de sodium.

3. Composition de marquage solide à base d'eau selon l'une quelconque des revendications 1 ou 2, dans laquelle la teneur totale en sel de métal alcalin d'acide carboxylique ayant 8 à 36 atomes de carbone (a) est dans la plage de 0,1 à 20 %, plus spécifiquement de 1 à 15 %, plus spécifiquement de 2 à 15 %, en poids en fonction du poids total de la composition.

4. Composition de marquage solide à base d'eau selon l'une quelconque des revendications 1 à 3, dans laquelle l'amide d'acide gras (b) a la formule (I) suivante
R₁CONR₂R₃ (I),
dans laquelle R₁ représente un groupe alkyle ou alcényle ayant de 5 à 18 atomes de carbone, ledit groupe alkyle ou alcényle étant facultativement substitué par un ou plusieurs groupes choisis parmi un atome chloro, un atome fluoro, un atome bromo, un groupe nitro, un groupe nitrile, un groupe hydroxyle, un groupe thiol, un groupe carboxyle, un groupe ester ayant 2 à 6 atomes de carbone, un groupe alcoxy en C_{1 à 22}, un groupe aryle en C_{6 à 14}, un groupe alkaryle en C₇ à C₂₀, un groupe amino, un groupe amino-alkyle en C_{1 à 22} et un groupe amino-di(alkyle en C_{1 à 22}), et
R₂ et R₃ indépendamment l'un de l'autre représentent un atome d'hydrogène ou un groupe alkyle en C₁ à C₆, facultativement substitué par un groupe hydroxyle et/ou un groupe alcoxy en C₁ à C₂₂.

5. Composition de marquage solide à base d'eau selon la revendication 4, dans laquelle au moins l'un parmi R₂ ou R₃ ne représente pas un atome d'hydrogène, plus spécifiquement dans laquelle R₂ et R₃ indépendamment l'un de l'autre représentent un groupe alkyle en C₁ à C₆, encore plus spécifiquement dans laquelle l'amide d'acide gras (b) est diméthylcapramide.

6. Composition de marquage solide à base d'eau selon l'une quelconque des revendications 1 à 5, dans laquelle la teneur totale en amide d'acide gras (b) est dans la plage de 0,1 à 20 %, plus spécifiquement 0,1 à 10 %, encore plus spécifiquement 0,2 à 5 %, en poids en fonction du poids total de la composition.

7. Composition de marquage solide à base d'eau selon l'une quelconque des revendications 1 à 6, dans laquelle l'agent colorant (c) est un pigment ou une teinture et/ou dans laquelle la teneur totale en agent colorant (c) est dans la plage de 0,1 à 20 %, plus spécifiquement 0,2 à 15 %, encore plus spécifiquement 0,5 à 10 %, en poids en fonction du poids total de la composition.

8. Composition de marquage solide à base d'eau selon l'une quelconque des revendications 1 à 7, dans laquelle la teneur totale en eau est dans la plage de 1 à 50 %, plus spécifiquement 2 à 30 %, encore plus spécifiquement 5 à 25 %, en poids en fonction du poids total de la composition.

9. Composition de marquage solide à base d'eau selon l'une quelconque des revendications 1 à 8, comprenant en outre au moins un cosolvant, plus spécifiquement dans laquelle le cosolvant est choisi parmi :
- des éthers de glycol tels que triéthylène glycol, polyéthylène glycol, éther monoéthylique de diéthylène glycol, éther monobutylique de diéthylène-glycol, éther monobutylique de dipropylène glycol, éther monométhylique de tripropylène glycol, des alcools, tels que phénoxyéthanol, phénoxypropanol ; des alcools linéaires ou ramifiés en C₁ à C₁₅ tels qu'isopropanol, butanol, isobutanol, pentanol, alcool benzylique, glycérol, diglycérol ou polyglycérol ;
- des esters tels qu'acétate d'éthyle ou acétate de propyle ;
- des esters de carbonate tels que carbonate de propylène ou carbonate d'éthylène ;
- des cétones telles que méthylisobutylcétone, acétone ou cyclohexanone, et
- des mélanges de ceux-ci,
plus spécifiquement dans laquelle le cosolvant est un mélange de glycérol et d'éther(s) de glycol, plus spécifiquement un mélange de glycérol et de triéthylène glycol et/ou de propylène glycol.

10. Composition de marquage solide à base d'eau selon la revendication 9, dans laquelle la teneur totale en cosolvant est dans la plage de 10 à 90 %, plus spécifiquement 20 à 90 %, encore plus spécifiquement 30 à 85 %, en poids en fonction du poids total de la composition.

11. Composition de marquage solide à base d'eau selon l'une quelconque des revendications 1 à 10, comprenant en outre au moins un additif, plus spécifiquement dans laquelle l'additif est choisi parmi un agent antimicrobien, un agent filmogène, une cire, un agent glissant, un inhibiteur de corrosion, un agent antimousse et/ou un agent d'ajustement de pH et des mélanges de ceux-ci.

12. Composition de marquage solide à base d'eau selon la revendication 11, dans laquelle la teneur totale en additif est dans la plage de 0,01 à 25 %, plus spécifiquement 0,05 à 20 %, en poids en fonction du poids total de la composition.

13. Composition de marquage solide à base d'eau selon l'une quelconque des revendications 1 à 12, qui est sous la forme d'un crayon, d'un crayon pastel, d'un bâton, d'un stylo de couleur.

14. Procédé de préparation de la composition de marquage solide à base d'eau selon l'une quelconque des revendications 1 à 13, ledit procédé comprenant les étapes successives suivantes :
A) addition d'eau et de cosolvant(s) facultatif(s) à une température dans la plage de 80 à 90 °C, plus spécifiquement avec un taux de cisaillement dans la plage de 20 à 25 m/s,
B) addition de composant a) à une température dans la plage de 80 à 90 °C, spécifiquement avec un taux de cisaillement dans la plage de 20 à 25 m/s,
C) addition de composant b) à une température dans la plage de 80 à 90 °C, spécifiquement avec un taux de cisaillement dans la plage de 20 à 25 m/s,
D) addition de composant c) à une température dans la plage de 80 à 90 °C, spécifiquement avec un taux de cisaillement dans la plage de 20 à 25 m/s,
E) façonnage de la composition solide à base d'eau à sa forme finale, plus spécifiquement par moulage, coulage ou extrusion, et refroidissement naturel de la composition à la température ambiante.

15. Utilisation d'une combinaison d'un sel de métal alcalin d'acide carboxylique ayant 8 à 36 atomes de carbone (a) et d'un amide d'acide gras (b) pour améliorer la douceur d'écriture et/ou la qualité du dépôt et/ou la solidité et/ou la stabilité au fil du temps d'une composition de marquage solide à base d'eau.
